Europäisches Patentamt

European Patent Office

Office européen des brevets

(19)

(11) Veröffentlichungsnummer: **0 242 630**
**A2**

## (12) EUROPÄISCHE PATENTANMELDUNG

(21) Anmeldenummer: 87104505.0

(22) Anmeldetag: 26.03.87

(51) Int. Cl.⁴: **H04M 1/02**

(30) Priorität: 21.04.86 DE 3613416

(43) Veröffentlichungstag der Anmeldung:
28.10.87 Patentblatt 87/44

(84) Benannte Vertragsstaaten:
**AT DE FR SE**

(71) Anmelder: **Siemens Aktiengesellschaft Berlin
und München**
**Wittelsbacherplatz 2**
**D-8000 München 2(DE)**

(72) Erfinder: **Awakowicz, Erwin, Dipl.-Ing.**
**Richard-Pietzsch-Weg 18**
**D-8000 München(DE)**
Erfinder: **Schiller, Kurt**
**Leonhardstrasse 70**
**D-8905 Mering(DE)**
Erfinder: **Grassl, Erwin**
**Drygalski-Allee 111**
**D-8000 München 71(DE)**

(54) **Fernsprechstation mit einer optischen Anzeigevorrichtung.**

(57) Fernsprechstation mit einer als Display gestalteten optischen Anzeigevorrichtung (1).

Die Anzeigevorrichtung (1) soll schnell und einfach montierbar sein.

Zu diesem Zweck ist die Anzeigevorrichtung (1) steckbar mit der Fernsprechstation (10) verbunden.

FIG 1

EP 0 242 630 A2

## Fernsprechstation mit einer optischen Anzeigevorrichtung

Die vorliegende Erfindung beinhaltet eine Fernsprechstation mit einer als Display gestalteten optischen Anzeigevorrichtung.

Optische Anzeigevorrichtungen in Fernsprechstationen sind üblicherweise innerhalb des Gerätes geneigt zum Benutzer angeordnet und zeigen Dienstleistungen in Form von Ziffern oder Schriftzeichen an. Es sind bereits Anordnungen bekannt, bei denen Mehrfachinformationen auf Anzeigevorrichtungen von Fernsprechstationen angezeigt werden, die wegen der Vielzahl der möglichen Informationen auf der Fernsprechstation angeordnet sind. Diese Anzeigevorrichtungen sind üblicherweise fest mit der Fernsprechstation verbunden.

Aufgabe der vorliegenden Erfindung ist es, ausgehend von der letztgenannten Anordnung eine Verbindung einer optischen Anzeigevorrichtung auf einer Fernsprechstation aufzuzeigen, die eine einfache und schnelle Montage gestattet.

Diese Aufgabe wird dadurch gelöst, daß die Anzeigevorrichtung auf die Fernsprechstation aufsteckbar ist.

Durch eine derartige konstruktive Gestaltung kann nunmehr die den jeweiligen Anforderungen an die Leistungsmerkmale der Fernsprechstation angepaßte optische Anzeigevorrichtung in einfacher Weise angebracht werden, ohne daß es zusätzlicher Werkzeuge bedarf.

Dabei kann die Anzeigevorrichtung einstückig mit ihr verbundene Stege aufweisen, die mit in Kammern der Fernsprechstation untergebrachten und über Durchbrüche zugänglichen Federelementen eine mechanische Verbindung eingehen. Die zur Anschaltung der Anzeigevorrichtung erforderlichen elektrischen Verbindungen können dabei über ein separates flexibles Kabel realisiert werden.

Die Stege können U-förmige Ausnehmungen besitzen, die mit entsprechend geformten Bereichen in den Schenkeln des im wesentlich U-förmig gestalteten Federelementes eine Verbindung eingehen. Um das Ablesen der optischen Anzeigevorrichtung zu erleichtern, können die Stege zur Anzeigefläche der Anzeigevorrichtung geneigt angeordnet sein.

Gemäß einer bevorzugten Ausführungsform kann das Federelement im wesentlich U-förmig gestaltet sein und sich im Basisbereich mit einer U-förmigen Ausbiegung gegen einen Ansatz in der Kammer abstützen, während die Schenkel des Federelementes U-förmige Bereiche aufweisen, die mit den U-förmigen Ausnehmungen der Stege der Anzeigevorrichtung zusammenarbeiten. Dabei besteht die Möglichkeit, daß durch unterschiedliche Winkelgrößen innerhalb der U-förmigen Ausnehmung in den Stegen der Anzeigevorrichtung und den U-förmigen Bereichen der Schenkel der Federelemente die Festigkeit der Verbindung zwischen der Anzeigevorrichtung und dem Federelemente wählbar ist. Hierdurch kann einmal eine gewünschte feste Verbindung zwischen der Anzeigevorrichtung und der Fernsprechstation erreicht werden, zum anderen kann auch die Möglichkeit gewählt werden, daß bei gegebenenfalls auf die Anzeigevorrichtung ausgeübten Stoß-und Schlagbeanspruchungen diese sich ohne schädliche Nachfolgen von der Fernsprechstation löst und anschließend sofort wieder einsetzbar ist.

Die Erfindung soll im folgenden anhand eines Ausführungsbeispiels näher erläutert werden.

Es zeigt

Fig. 1 die steckbare Befestigung einer optischen Anzeigevorrichtung auf einer Fernsprechstation in perspektivischer Darstellung,

Fig. 2 ein Teil der Anordnung nach Fig. 1, bei dem die optische Anzeigevorrichtung mit festem Sitz innerhalb der Fernsprechstation angeordnet ist,

Fig. 3 ein Teil der Anordnung nach Fig. 1, bei der die optische Anzeigevorrichtung durch Schlageinwirkung aus der Fernsprechstation herausklappbar ist.

Zur steckbaren Befestigung einer als Display gestalteten optischen Anzeigevorrichtung sind mit dieser zwei schmale Stege 2 und 3 einstückig verbunden. Diese Stege 2 und 3 sind winklig zur Anzeigefläche 4 angeordnet. Die Stege 2 und 3 besitzen jeweils sich gegenüberliegende, etwa U-förmige Ausnehmungen 5 und 6. Innerhalb einer jeweils durch einen Durchbruch 7 und 8 in dem Gehäuseoberteil 9 der Fernsprechstation 10 zugänglichen Kammer 11 ist ein Federelement 12 angeordnet.

Dieses Federelement 12 ist im wesentlichen U-förmig gestaltet und liegt einmal zu seiner Lagesicherung mit einer in seiner Basis 13 vorgesehenen U-förmigen Ausbiegung 14 an einem Ansatz 15 in der Kammer 11 an. Die Schenkel 16 und 17 besitzen U-förmig gebogene Bereiche 18 und 19. Diese Bereiche 18 und 19 greifen jeweils im befestigten Zustand der Anzeigevorrichtung in die U-förmigen Ausnehmungen 5 und 6 in den Stegen 2 und 3 der optischen Anzeigevorrichtung 1 ein, so daß eine - schnelle und einfache Befestigung der Anzeigevorrichtung innerhalb der Fernsprechstation erreicht werden kann.

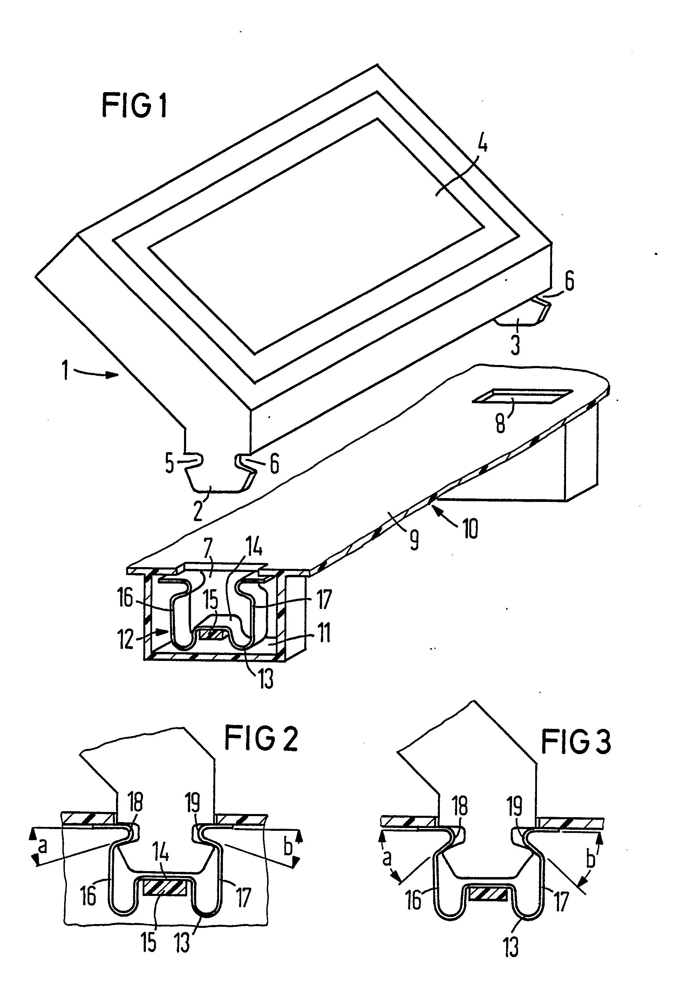

Hierbei besteht einmal die Möglichkeit, daß die Anzeige vorrichtung mit festem Sitz in die Fernsprechstation eingesteckt wird. Bei dieser in Fig. 2 gezeigten Ausführungsform ist der Winkel a bzw. b der U-förmigen Bereiche 18 und 19 des Federelementes 12 so bemessen, daß ein straffer Sitz der Anzeigevorrichtung in der Fernsprechstation 10 erreicht wird.

Durch Vergrößerung des Winkels a bzw. b der U-förmigen Bereiche 18 und 19 des Federelementes 12 und der Ausnehmungen 5 und 6 in den Stegen 2 und 3 läßt sich eine weniger feste Verbindung zwischen der Anzeigevorrichtung 1 und dem Federelement 12 erreichen, so daß die Anzeigevorrichtung bei auf sie einwirkenden Stoß-oder Schlagbelastungen z. B. in Richtung des Pfeils A ausklappt. Dadurch kann sie anschließend ohne Beschädigung ihrer Stege 2 und 3 sowie gegebenenfalls der Wandbereiche der Durchbrüche 7 und 8 erneut eingesetzt werden.

**Ansprüche**

1. Fernsprechstation (10) mit einer als Display gestalteten optischen Anzeigevorrichtung (1), **dadurch gekennzeichnet**, daß die Anzeigevorrichtung (1) auf die Fernsprechstation (10) aufsteckbar ist.

2. Anzeigevorrichtung nach anspruch 1, **dadurch gekennzeichnet**, daß die Anzeigevorrichtung (1) einstückig mit ihr verbundene Stege (2, 3) aufweist, die mit in Kammern (11) der Fernsprechstation (10) untergebrachten und über Durchbrüche (7, 8) zugänglichen Federelementen (12) eine mechanische Verbindung eingehen.

3. Anzeigevorrichtung nach Anspruch 2, **dadurch gekennzeichnet**, daß die Stege (2, 3) U-förmige Ausnehmungen (5, 6) besitzen, die mit entsprechend geformten Bereichen (18, 19) in den Schenkeln (16, 17) des im wesentlichen U-förmig gestalteten Federelementes (12) eine Verbindung eingehen.

4. Anzeigevorrichtung nach Anspruch 2, **dadurch gekennzeichnet**, daß die Stege (2, 3) zur Anzeigefläche (4) der Anzeigevorrichtung (1) geneigt angeordnet sind.

5. Anzeigevorrichtung nach Anspruch 3, **dadurch gekennzeichnet**, daß sich das Federelement (12) im Basisbereich (13) mit einer U-förmigen Ausbiegung (14) gegen einen Ansatz (15) in der Kammer (11) abstützt, während die Schenkel (16, 17) des Federelementes (12) U-förmige Bereiche (18, 19) aufweisen, die mit den U-förmigen Ausnehmungen (5, 6) der Stege (2, 3) der Anzeigevorrichtung (1) zusammenarbeiten.

6. Anzeigevorrichtung nach Anspruch 5, **dadurch gekennzeichnet**, daß durch unterschiedli che Winkelgrößen innerhalb der U-förmigen Ausnehmung (5, 6) in den Stegen (2, 3) der Anzeigevorrichtung (1) und den U-förmigen Bereichen (18, 19) der Schenkel (16, 17) der Federelemente (12) die Festigkeit der Verbindung zwischen der Anzeigevorrichtung (1) und dem Federelement (12) wählbar ist.

# FIG 1

# FIG 2

# FIG 3